# EUROPÄISCHE PATENTANMELDUNG

(11) **EP 1 571 290 A2**
(43) Veröffentlichungstag der Anmeldung: **07.09.2005**
(21) Anmeldenummer: 05004548.3
(22) Anmeldetag: 02.03.2005
(51) Int. Cl.: E06B 9/386

(54) **Sonnenschutzeinrichtung mit Solarlamellen**

(30) Priorität: 04.03.2004 DE 202004003356 U; 27.05.2004 DE 102004025954
(71) Anmelder: Hordijenko, Valentin, 80469 München (DE)
(72) Erfinder: Hordijenko, Valentin, 80469 München (DE)
(74) Vertreter: Haft, von Puttkamer, Berngruber, Czybulka

(57) **Zusammenfassung**

Die Erfindung betrifft eine Sonnenschutzeinrichtung mit Solarlamellen (3) und mit elektrischen Leitungen zum Ableiten des von den Lamellen (3) jeweils erzeugten Stromes zu Sammelschienen. Die Lamellen (3) sind an ihrer dem Sonnenlicht zuwendbaren Seite jeweils mit einer Solarfolie (4) verbunden oder mit einer direkt aufgetragenen Solarschicht versehen, die mit den Leitungen (10, 11; 12, 13) elektrisch verbunden ist.

## Beschreibung

Die vorliegende Erfindung betrifft eine Sonnenschutzeinrichtung mit Solarlamellen nach dem Oberbegriff des Patentanspruches 1.

Aus der Druckschrift GM 78 30 627 U1 geht ein Sonnenschutz für Fenster oder dergleichen hervor, bei der auf die der Sonneneinstrahlung zugewandten Seite der Lamellen Solarzellen aufgebracht und fest mit den Lamellen verbunden sind. Bei einer Alternative bilden die Solarzellen selbst die Lamellen. Dabei bestehen die Lamellen laminatartig aus mehreren Schichten, wobei diese Schichten die Solarzelle selbst darstellen. Genauer gesagt, ist die Trägerschicht der Solarzelle vergleichbar mit der bisher bekannten Lamelle, während die Halbleiterschicht der Solarzelle, die bei einer Sonneneinstrahlung die Energieerzeugung hervorbringt, die äußere Schicht darstellt.

Eine weitere Sonnenschutzeinrichtung mit Solarlamellen geht aus der DE 197 52 162 A1 hervor, wobei die einzelnen Solarzellenlamellen, über deren Beschaffenheit bzw. Aufbau nichts weiteres ausgesagt ist, über flexible leitende Drähte miteinander verbunden sind, die wiederum mit einer Kontaktschiene in Verbindung stehen.

Die Aufgabe der vorliegenden Erfindung besteht darin, eine Sonnenschutzeinrichtung mit Solarlamellen zu schaffen, die erheblich günstiger herstellbar und einfacher aufgebaut ist, als die vergleichbaren bekannten Sonnenschutzeinrichtungen mit Solarlamellen.

Diese Aufgabe wird durch eine Sonnenschutzeinrichtung mit Solarlamellen gelöst, die die Merkmale des Anspruches 1 umfasst.

Der wesentliche Vorteil der erfindungsgemäßen Sonnenschutzeinrichtung besteht darin, dass die einzelnen Solarlamellen wesentlich einfacher aufgebaut und daher kostengünstiger herstellbar sind, als vergleichbare bekannte Solarlamellen. Die im Zusammenhang mit der vorliegenden Erfindung verwendeten Solarfolien sind besonders einfach auf die Lamellen der Sonnenschutzeinrichtung aufbringbar, wobei sie sich wegen ihrer Flexibilität an die Form der Lamellen anpassen.

Von wesentlicher Bedeutung ist es auch, dass die Erfindung auch bei bereits bestehenden Sonnenschutzeinrichtungen dadurch angewendet werden kann, dass diese relativ einfach um- bzw. nachgerüstet werden. Dadurch ergeben sich äußerst kostengünstige Realisierungsmöglichkeiten. Insbesondere können auch alte Gebäude kostengünstig und wirtschaftlich interessant mit den erfindungsgemäßen Sonnenschutzeinrichtungen, z.B. durch Umrüsten oder Austausch der bereits vorhandenen Sonnschutzeinrichtungen, ausgestattet werden.

Vorteilhafte Ausgestaltungen der Erfindung gehen aus den Unteransprüchen hervor.

Im folgenden werden die Erfindung und deren Ausgestaltungen im Zusammenhang mit den Figuren näher erläutert. Es zeigen:
Figur 1 die stirnseitige Ansicht zweier Solarlamellen einer erfindungsgemäßen Sonnenschutzeinrichtung;
Figur 2 eine bevorzugte Art der Befestigung und Kontaktgabe zur Solarfolie einer Solarlamelle der erfindungsgemäßen Sonnenschutzeinrichtung;
Figur 3 eine Alternative zur Darstellung der Kontaktherstellung zwischen einer Solarlamelle und einer Kontaktschiene einer Führungsschiene der Sonnenschutzeinrichtung über einen federnden Kontakt;
Figur 4 eine an sich bekannte Sonnenschutzeinrichtung zur Erläuterung der vorliegenden Erfindung; und
Figur 5 eine Weiterbildung der Erfindung.

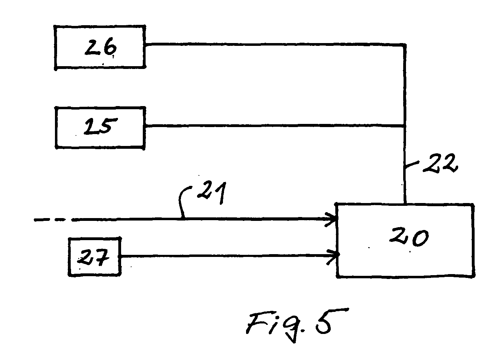

Gemäß Figur 4 besteht eine an sich bekannte Sonnenschutzeinrichtung 1, wie sie üblicherweise an Gebäuden außenseitig vor Fenstern angebracht wird, im wesentlichen aus einem Lamellenträger mit den Lamellen 3 und einer Schwenkeinrichtung für die Lamellen 3. Zur Fixierung der Lamellen 3 am Lamellenträger sind zwischen Zugschnüren 6, 7 beispielsweise jeweils obere Querfäden und untere Querfäden oberhalb bzw. unterhalb der Lamellen 3 angeordnet. Der Einfachheit halber sind diese Querfedern in der Figur 4 nicht dargestellt. Die Lamellen 3 werden an Führungsdrähten 5 geführt, die an ihrer unteren Seite in an sich bekannter Weise mit einer Spannschiene 4 verbunden sind. Die Führungsdrähte 5 verlaufen durch Öffnungen (nicht dargestellt) der einzelnen Lamellen 3. Entsprechende weitere Führungsdrähte 5 können auch zwischen den Zugschnüren 6 und 7 angeordnet sein und durch entsprechende Öffnungen der Lamellen 3 verlaufen. Die Zugschnüre 6 und 7 und gegebenenfalls die ihnen zugeordneten Führungsdrähte 5 sind vorzugsweise in einem gemeinsamen Punkt der Spannschiene 4 befestigt.

Das der Spannschiene 4 abgewandte Ende der Sonnenschutzeinrichtung 1 und der Lamellenträger sind in an sich bekannter Weise in einem oberen Rahmenteil 2 angeordnet, in dem auch die entsprechenden Antriebe zum Aufwärts- und Abwärtsbewegen der Spannschiene 4 zum Nachoben-Ziehen bzw. Herablassen der Lamellen 3 sowie die entsprechenden Antriebe zum Betätigen der Zugschnüre 6 und 7 zum Verschwenken der Lamellen 3 angeordnet sind.

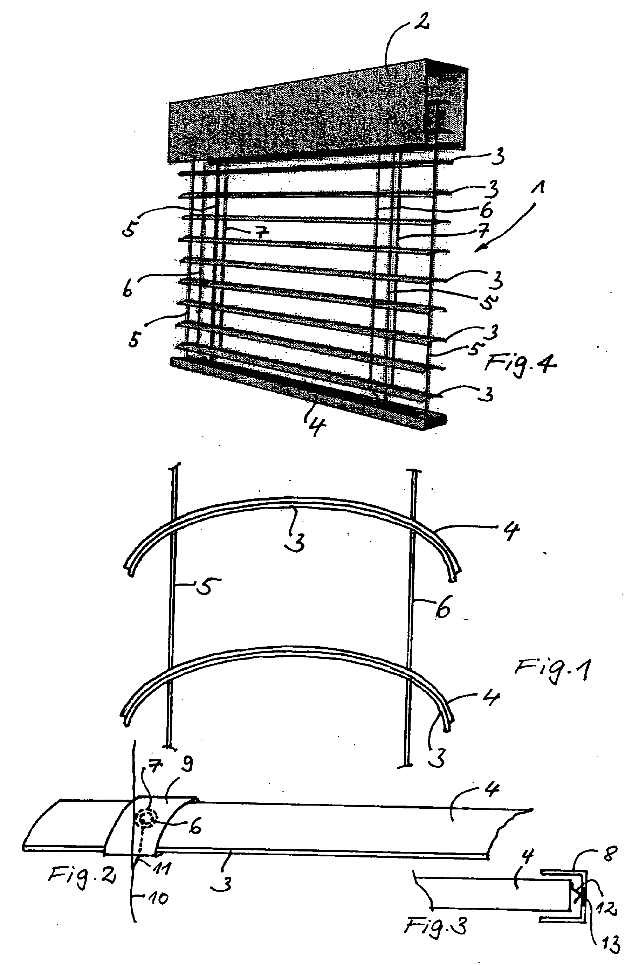

Gemäß der Figur 1 weisen die Lamellen 3 jeweils an derjenigen Seite, die bei der Schrägstellung der Lamellen 3 der Außenseite der Sonnenschutzeinrichtung 1 und somit der Sonne zugewandt sind, eine Solarfolie 4 auf, die vorzugsweise auf die entsprechende Oberfläche der Lamellen 3 aufkaschiert bzw. an dieser verklebt ist. Vorzugsweise erstreckt sich die Solarfolie 4 über die gesamte Oberfläche der Lamelle 3.

Gemäß Figur 2 erfolgt die Kontaktgabe zur Solarfolie 4 besonders bevorzugt und vorteilhaft durch einfache Aufclipsteile 9, die von der der Lamelle 3 abgewandten Seite auf die Kombination der Solarfolie 4 und der Lamelle 3 aufgeclipst werden, derart, dass ein an der der Solarfolie 4 zugewandten Seite des Aufclipsteiles 9 angeordneter Kontakt 6 elektrisch mit einem Kontakt 7 der Solarfolie 4 verbunden wird. Der Kontakt 6 ist mit einem Ende einer flexiblen elektrischen Leitung 11 verbunden, deren anderes Ende mit einer im Montagezustand vertikal an einer Seite der Kontaktclipse 9 aller Solarfolien 4 vorbeilaufenden elektrischen Leitung 10 verbunden ist. Zur Herstellung zweier elektrischer Verbindungen zur Solarfolie 4 sind bevorzugt entlang der Längserstreckung der Solarfolie 4 und der Lamelle 3 zwei der beschriebenen Aufclipsteile 9 mit den Kontakten 6 und 7 und den entsprechenden Leitungen 10 und 11 angeordnet. Oberseitig, d. h. also in dem Rahmenteil 2 sind die Leitungen 10 mit nicht näher dargestellten Sammelschienen verbunden, an denen der von den Solarfolien 4 erzeugte Strom abgenommen wird.

Gemäß Figur 3 ist es alternativ denkbar, vorzugsweise an beiden Seiten der Lamelle 3 und der darauf aufgebrachten Solarfolie 4 federnde Schleifkontakte 12 anzuordnen, die jeweils mit der Solarfolie 4 elektrisch in Verbindung stehen und federnd an einer Gleitschiene 13 anliegen, die vorzugsweise in einem eine Führung für die Enden der Lamellen 3 bildenden Rahmenteil 8 angeordnet ist und im Montagezustand vertikal verläuft. Andere Mittel zur Kontaktgabe sind denkbar. Oberseitig ist die Gleitschiene 13 mit einer Sammelschiene verbunden.

Es wird darauf hingewiesen, dass die erläuterten Solarfolien 4 beispielsweise von der Firma Siemens hergestellt werden und eine etwa einem Tesafilm vergleichbare Dicke von etwa 0,2 mm aufweisen. Im Wesentlichen bestehen derartige Solarfolien aus einer auf eine Basisschicht aufgedampften Metallschicht, die die Ladung aufnimmt, einer auf der Metallschicht angeordneten fotoaktiven Schicht, die Sonnenenergie absorbiert und in elektrische Ladung umwandelt, einer auf der fotoaktiven Schicht angeordneten lichtdurchlässigen Schicht, die gleichzeitig als Elektrode zur Aufnahme von Ladung dient, und einer Kunststofffolie, die die lichtdurchlässige Schicht abdeckt und gegen das Eindringen von Feuchtigkeit und mechanische Einflüsse schützt. Beispielsweise ist eine derartige Solarfolie in der Zeitschrift "Handelsblatt", Seite 17, Ausgabe Samstag, 23./24.1.2004 - Nr. 16 näher erläutert.

Im folgenden wird eine besonders bevorzugte Ausführungsform der Erfindung im Zusammenhang mit der Figur 5 näher erläutert. Dabei liegt dieser Ausführungsform die folgende Idee zugrunde. Da bei den Sonnenschutzeinrichtungen der vorliegenden Art zumeist die oben erwähnten elektrischen Antriebe zum Aufwärts- und Abwärtsbewegen der Spannschiene 4 bzw. der Lamellen 3 (Antrieb 26) und zum Einstellen des Anstellwinkels der Lamellen 3 (Antrieb 25) vorzugsweise im oberen Rahmenteil 2 ohnehin vorhanden sind, ist es denkbar, eine automatische Ansteuerung dieser Antriebe 25, 26 über eine mit einer Steuereinrichtung 20 verbundene Leitung 22 zu bewirken. Das entsprechende Steuersignal wird dabei an einer Leitung 21 erzeugt, die mit der Steuereinrichtung 20 verbunden ist. Das Steuersignal beinhaltet eine Aussage über die Größe des von den einzelnen Lamellen 3 (z.B. an der oben erwähnten Sammelschiene bzw. an der Leitung 10 (Figur 2) oder an der Leitung 13 (Figur 3)) erzeugten Stromes. Dabei erfolgt die Auswertung des Steuersignals in der Steuereinrichtung 20 derart, dass der Anstellwinkel der Lamellen 3 und somit die der Sonne jeweils ausgesetzte Fläche der Lamellen 3 optimiert werden. Je kleiner der erzeugte Strom ist, desto mehr wird der Anstellwinkel zur Vergrößerung der genannten Fläche der Lamellen 3 verändert. Wenn der erzeugte Strom beispielsweise einen vorgegebenen Sollwert überschreitet, kann der Anstellwinkel der Lamellen 3 automatisch so verändert werden, dass eine Abschattung des entsprechenden Raumes erfolgt und somit die mit einem Temperatursensor 27 gemessene Raumtemperatur auf einen Sollwert eingestellt wird. Eine übermäßige Erwärmung dieses Raumes kann somit vermieden werden.

Durch diese Weiterbildung der Erfindung können bekannte, kostspielige und die Gebäudeoptik stark beeinträchtigende, bewegliche Verschattungseinrichtungen an Gebäudeaußenwänden, welche aufwändige, störanfällige und zudem den Witterungseinflüssen ausgesetzte Antriebe erfordern, ersetzt werden.

Allgemein gesagt, kann durch die genannte Steuereinrichtung 20 eine optimale Steuerung des Anstellwinkels der Lamellen 3 zur Energiemaximierung und/oder Raumtemperatursteuerung erfolgen. Dabei ist es von Bedeutung, dass im wesentlichen keine zusätzlichen Einrichtungen und Antriebe erforderlich sind, sondern dass hierfür die vorliegende Sonnenschutzeinrichtung mit den ohnehin schon vorhandenen Antrieben zur Steuerung der Lamellen 3 ausgenutzt werden kann. Es ist auch denkbar lediglich oder zusätzlich die der Sonne ausgesetzte Fläche der Lamellen 3 durch gezieltes Ein- und Ausfahren der Lamellen 3 zur Energieoptimierung oder Abschattung zu verändern (Antrieb 26).

Zur individuellen Einstellung der Sonnenschutzeinrichtung durch einen Nutzer kann die automatische Steuereinrichtung 20 wahlweise abgeschaltet werden.

Es wird darauf hingewiesen, dass anstelle der beschriebenen Solarfolie 4 auch Solarschichten vorzugsweise durch galvanische Abscheidung zur Kostenoptimierung direkt auf die Lamellen 3 aufgebracht werden können. In diesem Zusammenhang wird auf die Veröffentlichung: Jahrestagung des ForschungsVerbunds Sonnenenergie, 25. - 26. September 2003 in Berlin, Themen 2003, "Dünnschichtsolarzellen auf der Basis von Verbindungshalbleitern", Dr. Michael Powalla, Seiten 22ff verwiesen.

Es wird ferner darauf hingewiesen, dass die vorliegenden Sonnenschutzeinrichtungen, wie erläutert, im allgemeinen vor Fenstern von Gebäuden außenseitig angebracht werden. Dadurch können bei entsprechender Ansteuerung unerwünschte Sonneneinstrahlungen und damit verbundene unerwünschte Aufheizungen der Gebäude vermieden werden. Es ist jedoch auch denkbar, sie speziell bei Hochhäusern in der doppelschaligen Gehäusefassade zwischen der äußeren Glasscheibe und der inneren Glasscheibe anzuordnen. Die vorliegenden Sonnenschutzeinrichtungen können auch an der Innenseite von Fenstern angeordnet werden.

## Patentansprüche

1. Sonnenschutzeinrichtung mit Solarlamellen und mit elektrischen Leitungen zum Ableiten des von den Solarlamellen jeweils erzeugten Stromes zu Sammelschienen, **dadurch gekennzeichnet, dass** die Lamellen (3) an ihrer dem Sonnenlicht zuwendbaren Seite jeweils mit einer Solarfolie (4) verbunden oder mit einer direkt aufgetragenen Solarschicht versehen sind, die mit den Leitungen (10, 11; 12, 13) elektrisch verbunden ist.

2. Sonnenschutzeinrichtung nach Anspruch 1, **dadurch gekennzeichnet, dass** die Solarfolie (4) auf die dem Sonnenlicht zuwendbare Seite der Lamelle (3) aufkaschiert bzw. aufgeklebt ist.

3. Sonnenschutzeinrichtung nach Anspruch 1, **dadurch gekennzeichnet, dass** die Solarschicht galvanisch aufgetragen ist.

4. Sonnenschutzeinrichtung nach einem der Ansprüche 1 bis 3, **dadurch gekennzeichnet, dass** auf die Solarfolie (4) oder auf die Solarschicht und die diese tragende Lamelle (3) Aufclipsteile (9) aufclipsbar sind, die jeweils an ihrer der Solarfolie (4) oder der Solarschicht zugewandten Seite einen Kontakt (6) aufweisen, der beim Aufclipsen elektrisch mit einem weiteren Kontakt (7) der Kontaktfolie (4) elektrisch in Verbindung tritt und dass der Kontakt (6) des Aufclipsteiles (9) über eine elektrische Leitung (11) mit einer weiteren elektrischen Leitung (10) elektrisch verbunden ist, die im Montagezustand seitlich an den Aufclipsteilen (9) der Lamellen (3) in vertikaler Richtung vorbei verläuft und oberseitig mit einer Sammelschiene verbunden ist.

5. Sonnenschutzeinrichtung nach Anspruch 4, **dadurch gekennzeichnet, dass** jeweils an einer Lamelle (3) und der darauf angeordneten Solarfolie (4) oder Solarschicht in Längsrichtung der Lamelle (3) voneinander beabstandet zwei Aufclipsteile (9) vorgesehen und jeweils über eine elektrische Leitung (11) mit einer weiteren elektrischen Leitung (10) verbunden sind.

6. Sonnenschutzeinrichtung nach einem der Ansprüche 1 bis 3, **dadurch gekennzeichnet, dass** an einer Stirnseite der Lamellen (3) wenigstens ein federnder Kontakt (12) angeordnet ist, der mit einem Schleifkontakt der Solarfolie (4) oder Solarschicht elektrisch verbunden ist und an einer im Montagezustand vertikal verlaufenden Gleitschiene (13) federnd anliegt, die oberseitig mit einer Sammelschiene verbunden ist.

7. Sonnenschutzeinrichtung nach Anspruch 6, **dadurch gekennzeichnet, dass** an jeder Stirnseite der Lamellen (3) jeweils ein federnder Schleifkontakt (12) und eine Gleitschiene (13) angeordnet sind.

8. Sonnenschutzeinrichtung nach Anspruch 6 oder 7, **dadurch gekennzeichnet, dass** die Gleitschiene (13) in einer die Stirnseiten der Lamellen (3) führenden Führungsschiene (8) angeordnet ist.

9. Sonnenschutzeinrichtung nach einem der Ansprüche 1 bis 8, **dadurch gekennzeichnet, dass** sich die Solarfolie (4) oder Solarschicht im wesentlichen über die gesamte Oberfläche der Lamelle (3) erstreckt.

10. Sonnenschutzeinrichtung nach einem der Ansprüche 1 bis 9, **dadurch gekennzeichnet, dass** eine Steuereinrichtung (20) vorhanden ist, der ein Steuersignal zuführbar ist, das eine Information über die Größe des an den Lamellen (3) erzeugten Stromes enthält, und dass die Steuereinrichtung (20) den die Anstellwinkel der Lamellen (3) einstellenden Antrieb (25) und/oder den das Ein- und Ausfahren der Lamellen (3) steuernden Antrieb (26) zur Maximierung der erzeugten Energie und/oder zur Optimierung der Sonneneinstrahlung in den hinter der Sonnenschutzeinrichtung befindlichen Raum steuert.

11. Sonnenschutzeinrichtung nach Anspruch 10, **dadurch gekennzeichnet, dass** der den Anstellwinkel steuernde Antrieb (25) so steuerbar ist, dass die der Sonne zugewandte Fläche der Lamellen (3) zur Vergrößerung des erzeugten Stromes automatisch vergrößert wird.

12. Sonnenschutzeinrichtung nach Anspruch 10 oder 11,
**dadurch gekennzeichnet, dass** der das Ein- und Ausfahren steuernde Antrieb (26) so steuerbar ist, dass die der Sonne ausgesetzte Anzahl der Lamellen (3) zur Vergrößerung des erzeugten Stromes automatisch vergrößert wird.

13. Sonnenschutzeinrichtung nach einem der Ansprüche 10 bis 12, **dadurch gekennzeichnet, dass** der den Anstellwinkel steuernde Antrieb (25) so steuerbar ist, dass die der Sonne zugewandte Fläche der Lamellen (3) zur automatischen Einstellung der von einem Temperatursensor (27) gemessenen Raumtemperatur auf einen vorbestimmten Wert eingestellt wird.

14. Sonnenschutzeinrichtung nach einem der Ansprüche 10 bis 13, **dadurch gekennzeichnet, dass** der das Ein- und Ausfahren steuernde Antrieb (26) so steuerbar ist, dass die Anzahl der der Sonne ausgesetzten Lamellen (3) zur automatischen Einstellung der von einem Temperatursensor (27) gemessenen Raumtemperatur auf einen vorbestimmten Wert eingestellt wird.
